# EUROPEAN PATENT APPLICATION

(11) **EP 4 687 210 A1**
(43) Date of publication of application: **04.02.2026**
(21) Application number: 24192227.7
(22) Date of filing: 01.08.2024
(51) Int. Cl.: H01M 50/358, H01M 50/367, H01M 50/333, H01M 50/392, H01M 10/6567

(54) **COLLECTION DEVICE, COLLECTION SYSTEM AND BATTERY HOUSING**

(71) Applicant: MANN+HUMMEL GmbH, 71636 Ludwigsburg (DE)
(72) Inventor: ZBIRAL, Robert, 71636 Ludwigsburg (DE); JESSBERGER, Thomas, 71636 Ludwigsburg (DE)
(74) Representative: Mann + Hummel Intellectual Property

(57) **Abstract**

A collection device (100) for an immersion cooled battery, in particular a traction battery of a motor vehicle, is configured to be mounted to a battery housing (60) and comprises a base body (10) comprising a fluid inlet (11), a fluid outlet (13) for discharging a fluid escaping from the battery, and a fluid passage (22) extending between the fluid inlet (11) and the fluid outlet (13), the base body (10) surrounding an interior space (28), and a liquid absorbing material (30) disposed in at least part of the interior space (28).

## Description

### Technical Field

Embodiments relate to a collection device and a collection system for an immersion cooled battery, in particular a traction battery of a motor vehicle, as well as a battery housing of an immersion cooled battery, in particular a traction battery of a motor vehicle, comprising a collection system.

### Background Art

Battery electric storage systems used as stationary systems or as traction batteries for vehicles contain a certain number of battery cells. In immersion cooled batteries the cells within the system are in contact with a liquid. This liquid can preferably be used to cool the cells and surround them in whole or in part. Furthermore, the liquid can be the medium of a cooling circuit that is under a certain pressure.

In the event of a malfunction of one or more battery cells, an overpressure occurs within the outwardly sealed system. This can potentially damage the battery housing and the systems inside, for example the cooling system. To prevent this, a pressure relief valve is provided that is opened until an acceptable pressure level is reached again. After pressure equalization, the valve and therefore also the system is sealed again in a liquid-tight and essentially gas-tight manner. As long as the valve is open, fluids like gases and also liquid leaks into the environment.

WO 2022/162237 A1 discloses an immersion cooled battery for a vehicle such as an electric vehicle or a hybrid electric vehicle. A deflection wall is provided inside a housing of the battery adjacent to a burst disc for venting, to deflect any coolant fluid that may be passing through the burst disc at high velocity, so as to at least encourage it to remain in the housing instead of passing directly out of the vent pipe. More specifically, the deflection wall is arranged so as to necessitate fluid from the burst disc to reverse direction if it is to pass out of the vent pipe.

DE 10 2020 114 274 A1 discloses a battery for a motor vehicle. The battery has a protective device to prevent thermal runaway of the battery cells. The protective device comprises an adsorption material, in particular a zeolite material, and a liquid adsorbable therein. In a first variant, the adsorption material is impregnated with the liquid, whereby heat generated in the event of a thermal fault is dissipated and distributed by evaporation of the liquid from the adsorption material. In a second variant, in the event of a thermal fault, vapor generated by evaporation of the liquid is absorbed in the previously dry adsorption material in order to cool the battery cells.

### Summary

It is an object of the embodiments to provide an improved collection device for an immersion cooled battery, in particular a traction battery of a motor vehicle.

Another object is to provide an improved collection system for an immersion cooled battery, in particular a traction battery of a motor vehicle.

Another object is to provide a battery housing of an immersion cooled battery, in particular a traction battery of a motor vehicle, comprising an improved collection system.

According to an aspect of the embodiments the object is achieved by a collection device for an immersion cooled battery, in particular a traction battery of a motor vehicle, the collection device being configured to be mounted to a battery housing and comprising a base body comprising a fluid inlet, a fluid outlet for discharging a fluid escaping from the battery, and a fluid passage extending between the fluid inlet and the fluid outlet, the base body surrounding an interior space, and a liquid absorbing material disposed in at least part of the interior space.

According to a further aspect of the embodiments the other object is achieved by a collection system for the immersion cooled battery, the collection system comprising the collection device, and a pressure relief valve arranged at the fluid inlet of the base body of the collection device, the pressure relief valve being configured to open the fluid passage when a predetermined excess pressure in the battery housing is reached or exceeded.

According to a further aspect of the embodiments the other object is achieved by a battery housing of the immersion cooled battery, the battery housing comprising the collection system, and an opening. The base body of the collection system is mounted inside or outside the battery housing, the base body comprising a front side or a rear side in a substantially fluid tight manner to the opening, and the pressure relief valve is mounted at the opening.

Advantageous embodiments are described in the dependent claims, the description and the drawings.

According to embodiments of the collection device, the collection device may further comprise a labyrinth structure arranged along the fluid passage and inside the base body, the labyrinth structure comprising at least one contour element configured to control a direction of liquid when streaming from the fluid inlet to the fluid outlet.

The proposed collection device is intended to prevent liquid of an immersion cooled battery where cells of the battery are at least partly immersed in the liquid to leak into the environment in case of a malfunction when a pressure relief valve is open for pressure equalization. Therefore, the collection device may always be used together with a pressure relief valve. For this purpose, the pressure relief valve may advantageously be integrated into the collection device or at least be mounted close to the collection device.

The collection device comprises a base body with a circumferentially extending rim which is provided for a liquid-tight coupling to the battery housing. The base body comprises at least one inlet opening, configured to be closed under normal operating conditions by a re-closeable overpressure valve, and at least one outlet opening for release of venting gases. The base body may completely cover the valve apart from the exhaust gas opening. The direction of the liquid flowing through the valve can be specifically determined, thus enabling to prevent the leakage of the liquid by means of a labyrinth-like structure and also protect the inside of the liquid collection device against external environmental influences.

A liquid absorbing material, e.g. a sponge, a granulate, a (super) absorbent polymer or another suitable medium, is disposed in a suitable form inside the base body where this material can additionally be fixed by a corresponding support, for example, the granulate in a container or the sponge in a sufficient solid. Advantageously, part of the labyrinth structure can also be integrated into this support, as well as contour elements that specifically direct the liquid, for example, to avoid direct impact to the absorbing material. It may also be possible that part of the valve contour itself represents a section of the labyrinth structure.

Depending on the mounting position of the collection device at the battery housing, the shape and arrangement of the collection device can be designed appropriately, where simple geometric shapes such as circular, square or rectangular contour elements may be preferred for the respective elements.

Thus, by means of targeted control of the liquid flow direction, by means of a suitable liquid-absorbing material and with the help of an appropriate labyrinth structure, liquid coolant can reliably be prevented from leaking into the environment when a pressure relief valve at a housing of a liquid-cooled battery is temporarily opened for pressure equalization in case of a malfunction inside the battery housing.

According to embodiments of the collection device, the collection device may further comprise at least one support element may be arranged inside the base body and fixing the liquid absorbing material to the base body. Thus, the liquid absorbing material may be protected against mechanical vibrations. Proper functioning of the pressure relief valve may be guaranteed.

According to embodiments of the collection device, the liquid absorbing material may be any one or any combination of a sponge, a granulate, and an absorbent polymer. These materials may be suitable for absorbing appropriate amounts of liquid during venting phases.

According to embodiments of the collection device, at least part of the labyrinth structure may be integrated in the at least one support element supporting the liquid absorbing material. Advantageously, several functions may be combined in the same element.

According to embodiments of the collection device, the base body may further comprise a closed circumference in relation to an axial direction of the collection device, in particular, the base body may further comprise a circular shape or a square shape or a rectangular shape. Base bodies with these shapes may be easy to manufacture as well as appropriate to be accommodated in the interior or exterior space of the battery housing.

According to embodiments of the collection device, the base body may further comprise a sealing element and a circumferential rim configured to be a seat for the sealing element that is configured to be arranged circumferentially between the circumferential rim and the battery housing when the collection device is mounted to the battery housing. Thus, a liquid-tight coupling to the battery housing may be provided for the collection device.

According to embodiments of the collection device, the collection device may further comprise at least one protection element arranged in the interior space of the base body and configured to prevent direct impact of liquid on the liquid absorbing material. Advantageously, the liquid absorbing material may be prevented from getting damaged by possible high flow speeds of the emerging fluid.

According to embodiments of the collection device, the liquid absorbing material may be arranged circumferentially on a radially outer part of the interior space. Alternatively, the liquid absorbing material may be arranged in a lower part of the interior space referring to a direction of gravity in an intended mounting situation at the battery housing. Arrangement of the liquid absorbing material at a radially outer part of the interior space may be appropriate for a round shaped base body which may be mounted on top of a battery housing. Arrangement of the liquid absorbing material in a lower part of the interior space may be preferred for a base body mounted at a side of a battery housing where gravity moves the emerging liquid to the lower part of the base body. Thus, the liquid may be collected advantageously by the absorbing material positioned in this part.

The proposed collection system is intended to prevent liquid of an immersion cooled battery where cells of the battery are at least partly immersed in the liquid to leak into the environment in case of a malfunction when a pressure relief valve is open for pressure equalization. Therefore the collection system comprises a pressure relief valve with the above described collection device. For this purpose, the pressure relief valve may advantageously be integrated into the collection device.

Thus, by means of targeted control of the liquid flow direction, by means of a suitable liquid-absorbing material and with the help of an appropriate labyrinth structure, liquid coolant can reliably be prevented from leaking into the environment when the pressure relief valve at a battery housing of a liquid-cooled battery is temporarily opened for pressure equalization in case of a malfunction inside the battery housing.

According to embodiments of the collection system, the pressure relief valve may be at least partly accommodated in the interior space of the base body. Advantageously, a compact design of the collection system may be enabled for easy accommodating at an internal or external space of a battery housing.

Advantageously, by means of targeted control of the liquid flow direction, by means of a suitable liquid-absorbing material and with the help of an appropriate labyrinth structure, liquid coolant can reliably be prevented from leaking into the environment when the pressure relief valve at the battery housing of a liquid-cooled battery is temporarily opened for pressure equalization in case of a malfunction inside the battery housing.

The collection system may favorably be accommodated on top of the battery housing or on a side of the battery housing where appropriate space is available.

### Brief Description of Drawings

The embodiments together with the above-mentioned and other objects and advantages may best be understood from the following detailed description of the embodiments, but not restricted to the embodiments.
Figure 1 is a collection system for an immersion cooled battery, in particular a traction battery of a motor vehicle, according to embodiments, in an isometric view from a front side.
Figure 2 is the collection system in a top view with section planes A-A, B-B, C-C.
Figure 3 is a sectional view of the collection system in section plane A-A with detail X.
Figure 4 is detail X of the sectional view of the collection system according to Fig. 3.
Figure 5 is a sectional view of the collection system in section plane B-B with detail Y
Figure 6 is detail Y of the sectional view of the collection system according to Fig. 5.
Figure 7 is a sectional view of the collection system in section plane C-C.
Figure 8 is the collection device of the collection system according to Figs. 1 to 7, in an isometric view from a front side.
Figure 9 is the collection device according to Fig. 8 from a rear side.
Figure 10 is the collection device in a top view with section planes A-A, B-B, C-C.
Figure 11 is a sectional view of the collection device in section plane A-A with detail X.
Figure 12 is detail X of the sectional view of the collection device according to Fig. 11.
Figure 13 is a sectional view of the collection device in section plane B-B with detail Y
Figure 14 is detail Y of the sectional view of the collection device according to Fig. 13.
Figure 15 is a sectional view of the collection device in section plane C-C.
Figure 16 is a collection system according to further embodiments, in an isometric view from a front side.
Figure 17 is the collection system according to Fig. 16 in a top view with section planes A-A, C-C, D-D.
Figure 18 is a sectional view of the collection system in section plane A-A with section plane B-B.
Figure 19 is a sectional view of the collection system in section plane B-B with detail X.
Figure 20 is detail X of the sectional view of the collection system according to Fig. 19.
Figure 21 is a sectional view of the collection system in section plane C-C.
Figure 22 is a sectional view of the collection system in section plane D-D.
Figure 23 is the collection device of the collection system according to Figs. 16 to 22, in an isometric view from a front side.
Figure 24 is the collection device according to Fig. 23 from a rear side.
Figure 25 is the collection device according to Fig. 23 in a top view with section planes A-A, C-C, D-D.
Figure 26 is a sectional view of the collection device in section plane A-A with section plane B-B.
Figure 27 is a sectional view of the collection device in section plane B-B.
Figure 28 is a sectional view of the collection device in section plane C-C.
Figure 29 is a sectional view of the collection device in section plane D-D.

### Description of Embodiments

In the drawings, like elements are referred to with equal reference numerals. The drawings are merely schematic representations, not intended to portray specific parameters of the embodiments. Moreover, the drawings are intended to depict only typical embodiments and therefore should not be considered as limiting the scope of the embodiments.

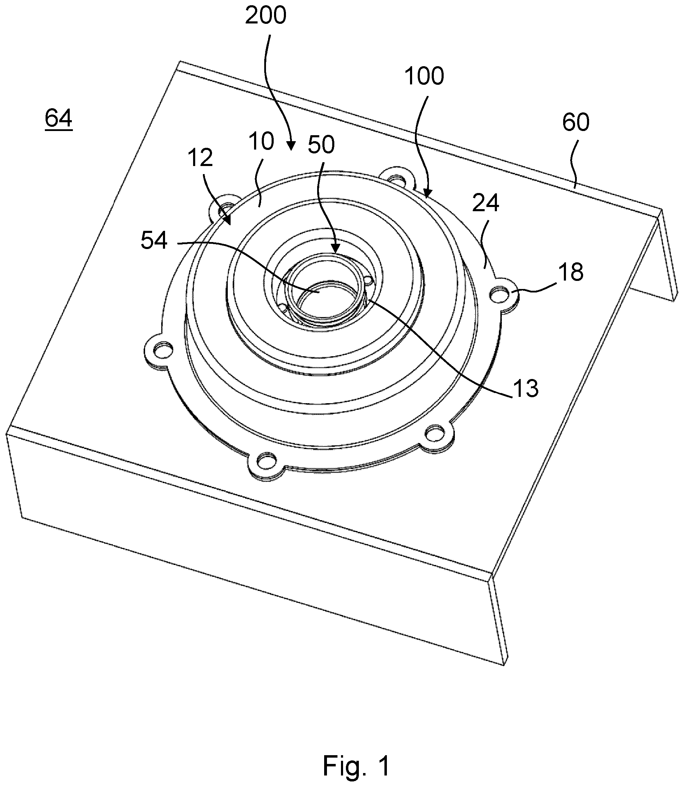

Fig. 1 depicts a collection system 200 for an immersion cooled battery, in particular a traction battery of a motor vehicle, according to embodiments, in an isometric view from a front side 12.

The collection system 200 comprises a collection device 100 and a pressure relief valve 50. The collection system 200 is mounted to a battery housing 60.

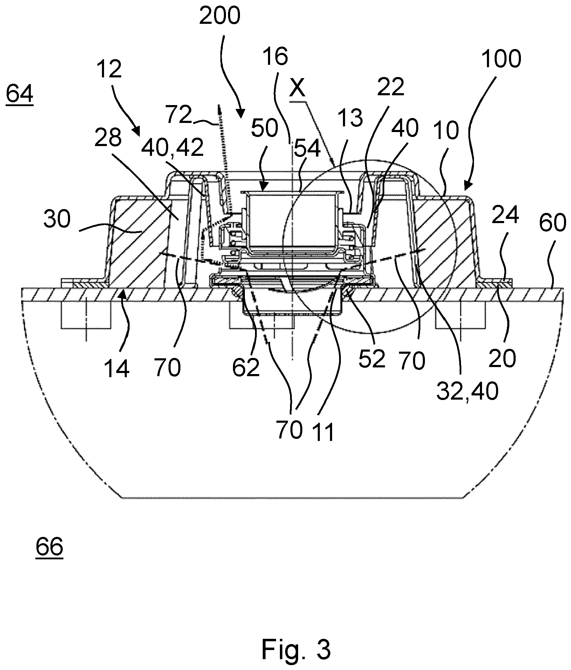

A base body 10 of the collection system 200 is mounted inside or outside the battery housing 60, the base body 10 comprising a front side 12 or a rear side 14 in a substantially fluid tight manner to at least one opening 62 (as shown in Fig. 3), having a fluid permeable fluid passage 22 for venting. A pressure relief valve 50 is mounted at the at least one opening 62 and is configured to open the fluid passage 22 when a predetermined excess pressure in the battery housing 60 is reached or exceeded.

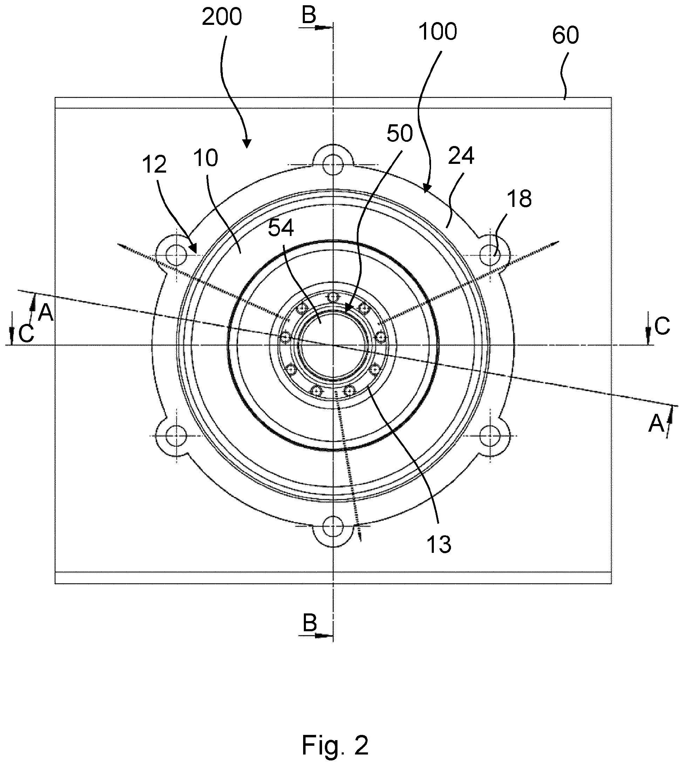

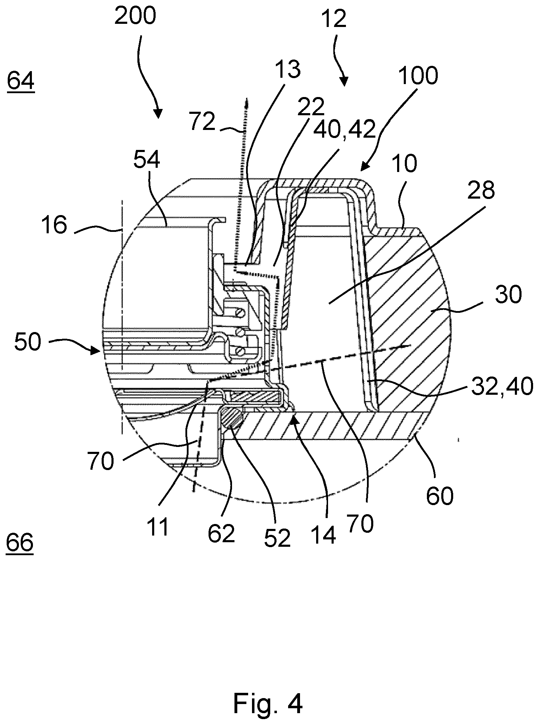

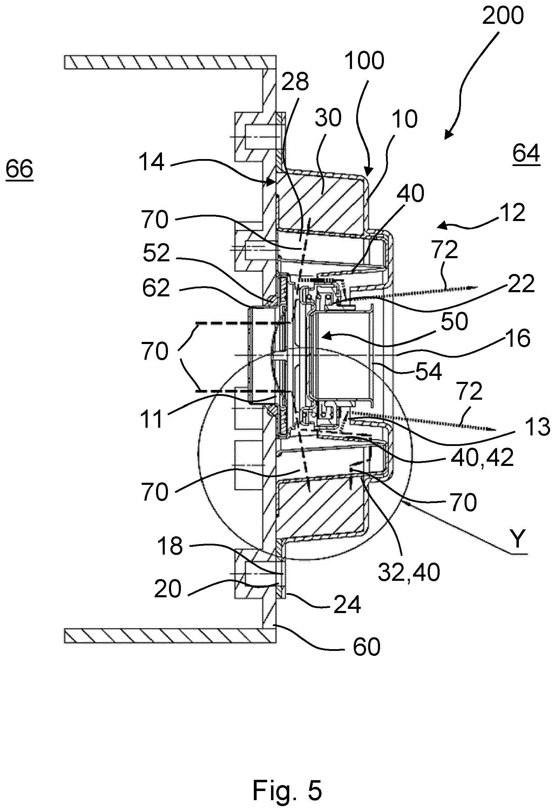

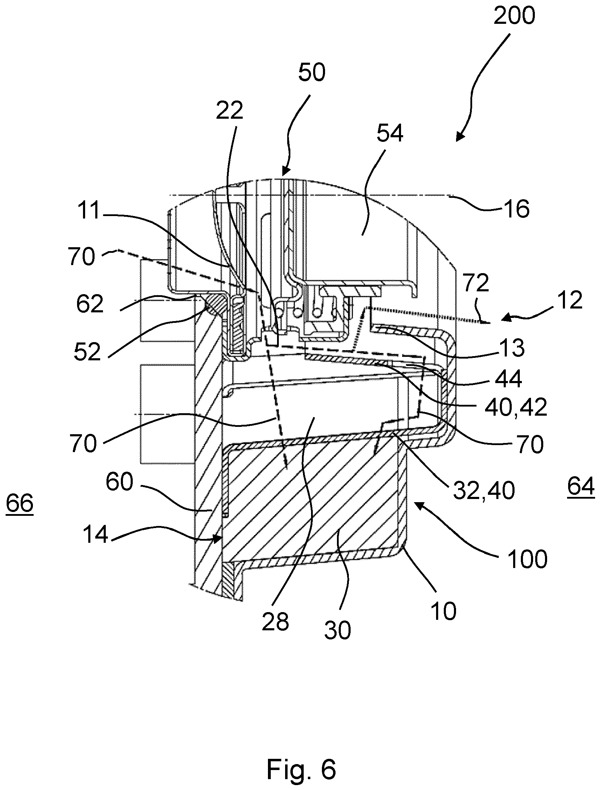

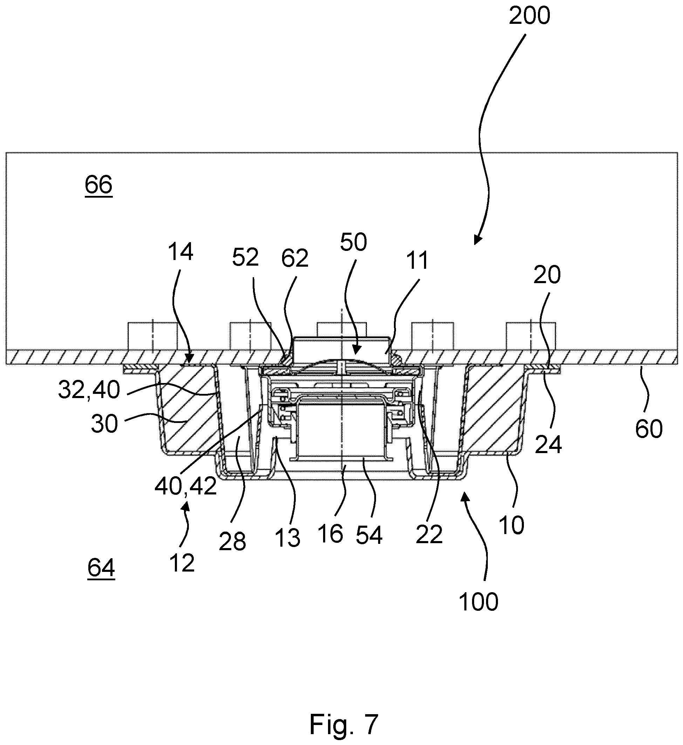

Fig. 2 depicts the collection system 200 in a top view with section planes A-A, B-B, C-C. Fig. 3 depicts a sectional view of the collection system 200 in section plane A-A with detail X, which is shown in Fig. 4. Fig. 5 shows a sectional view of the collection system 200 in section plane B-B with detail Y, which is shown in Fig. 6. Fig. 7 depicts a sectional view of the collection system 200 in section plane C-C.

The collection device 100 comprises a base body 10 having a closed circumference in relation to an axial direction 16 of the collection device 100, with a circular shape. Further, the base body 10 has a circumferential rim 24 which is a seat for a sealing element 20 being arranged circumferentially between the rim 24 of the base body 10 and the battery housing 60 when mounted to the battery housing 60.

As may be seen from the sectional views in Figs. 3 to 7, the base body 10 has a fluid inlet 11 and a fluid outlet 13 for discharging a fluid escaping from the battery with a fluid passage 22 extending between the fluid inlet 11 and the fluid outlet 13.

The base body 10 is surrounding an interior space 28. The collection device 100 further comprises a liquid absorbing material 30 disposed in at least part of the interior space 28. The collection device 100 also comprises a labyrinth structure 40 along the fluid passage 22 and inside the base body 10. The labyrinth structure 40 comprises at least one contour element 42 configured to control a direction of the liquid when streaming from the fluid inlet 11 to the fluid outlet 13.

The pressure relief valve 50 is mounted to an opening 62 of the battery housing 60 and sealed against the battery housing 60 by a sealing element 52, e.g. an O-ring.

The pressure relief valve 50 is arranged at a fluid inlet 11 of the base body 10 and is configured to open the fluid passage 22 when a predetermined excess pressure in the battery housing 60 is reached or exceeded. The pressure relief valve 50 is at least partly accommodated in an interior space 28 of the base body 10.

The pressure relief valve 50 is configured with a resealable closure element 54, e.g. by a spring element. So, the pressure relief valve 50 may be temporarily opened for pressure equalization in case of a malfunction inside the battery housing 60, e.g. by a cell venting and the reclosed again after pressure equalization.

When opened, fluids from an interior 66 of the battery housing 60 may exit through the pressure relief valve 50 and also through the fluid outlet 13 of the base body 10 into the environment 64. These fluids may comprise venting gases from cells of the battery of the immersion cooled battery.

In the sectional views in Figs. 3 to 6, possible fluid streams 70, 72 are shown during venting when the closure element 54 of the pressure relief valve 50 is open. A gas stream 72 (dotted line) exits around the closure element 54 through the fluid outlet 13 into the environment 64. A liquid stream 70 (dashed line) exits through the opening 62 of the battery housing 60 around the closure element 54, but then is deflected by contour elements 42 of the labyrinth structure 40 and is directed due to inertia of the liquid to the liquid absorbing element 30 where it may be absorbed. Thus, the liquid does not exit into the environment.

The liquid absorbing material 30 is arranged circumferentially on a radially outer part of the interior space 28. This is advantageous due to the circular shape of the base body 10. The collection system 200 may be mounted on top of a battery housing 60. So there is no preferential direction for the fluids exiting the battery housing 60 and the liquid therefore may be directed radially outward from the opening 62.

The liquid absorbing material 30 may be fixed to the base body 10 by at least one support element 32 arranged inside the base body 10. At least part of the labyrinth structure 40 may be integrated in the support element 32 supporting the liquid absorbing material 30.

The liquid absorbing material 30 may be at least one of a sponge, a granulate, an absorbent polymer and be arranged in a fixed suitable form inside the base body 10.

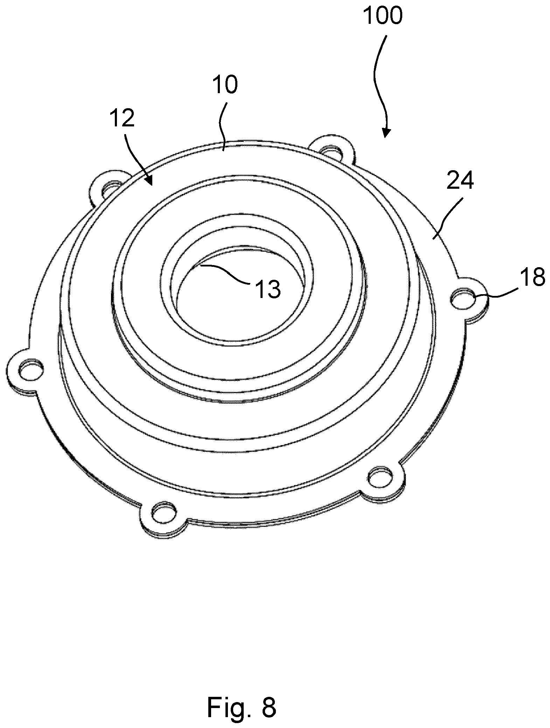

In Figs. 8 to 15 corresponding views of the collection device 100 alone without the pressure relief valve 50 are shown.

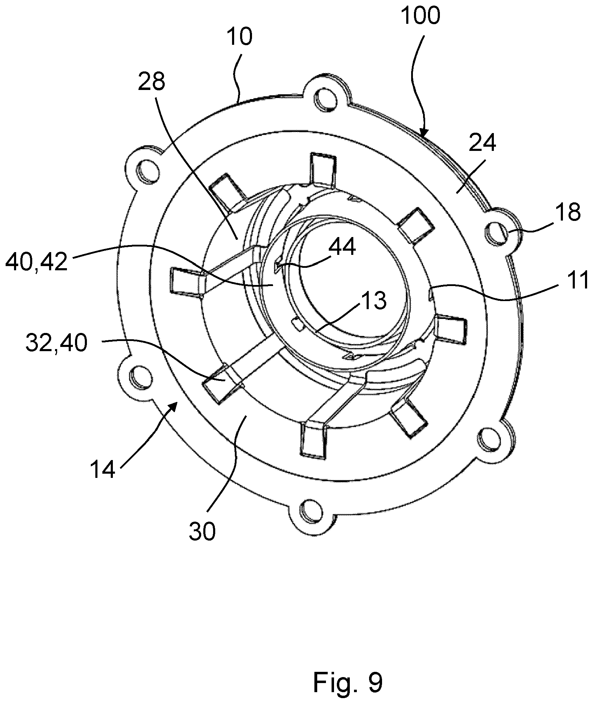

Fig. 8 depicts the collection device 100 of the collection system 200 according to Figs. 1 to 7, in an isometric view from the front side 12, whereas in Fig. 9 the collection device 100 is depicted from the rear side 14.

In Fig. 9 the interior space 28 of the collection device 100 is to be seen.

The liquid absorbing material 30 is arranged circumferentially on a radially outer part of the interior space 28. Support elements 32 being part of the labyrinth structure 40 are fixing the liquid absorbing material 30 to the radially outer wall of the base body 10. Radially inwards contour elements 42 of the labyrinth structure 40 are arranged connected to the support elements 32. The contour elements 42 are configured with radial discharge openings 44 for enabling the liquid to stream radially outward when exiting the battery housing 60.

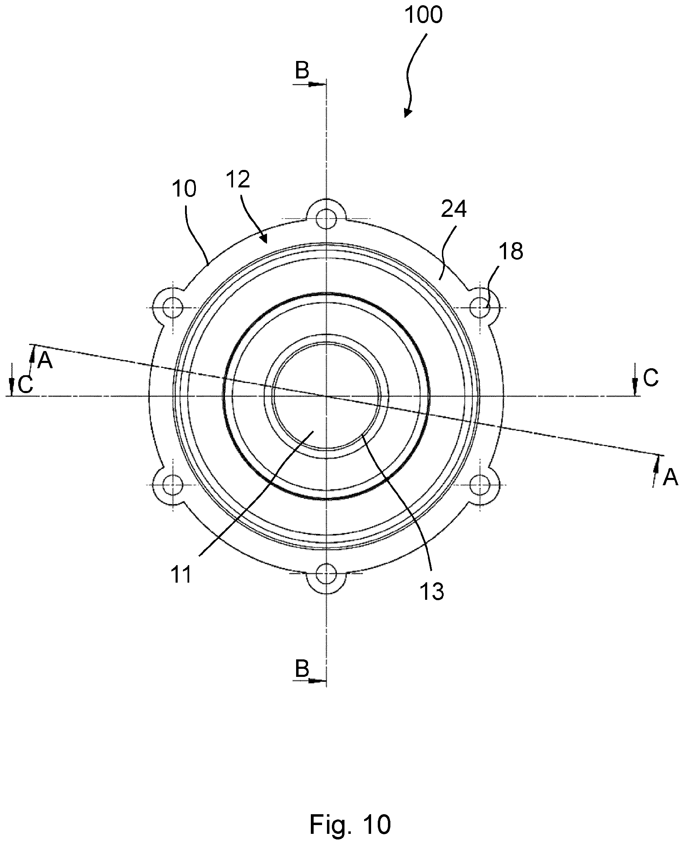

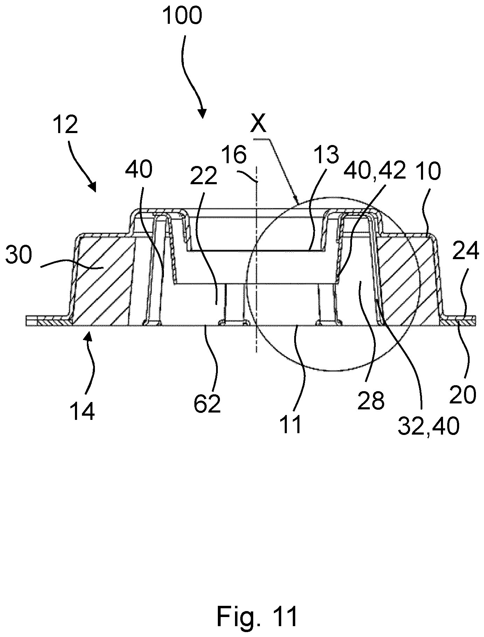

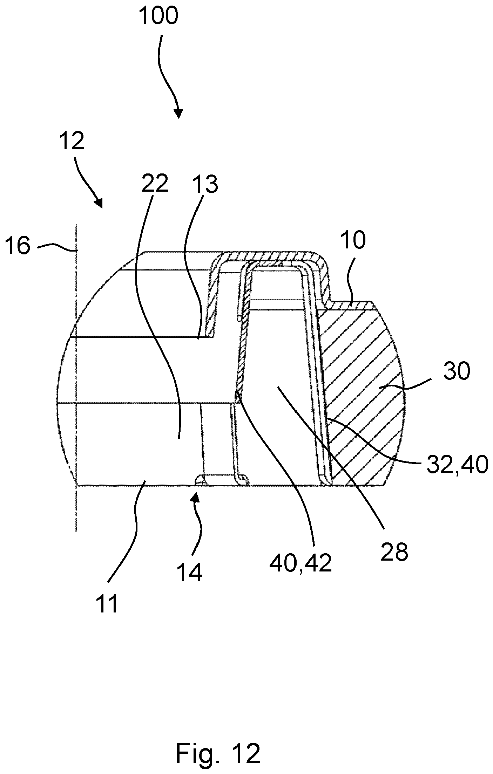

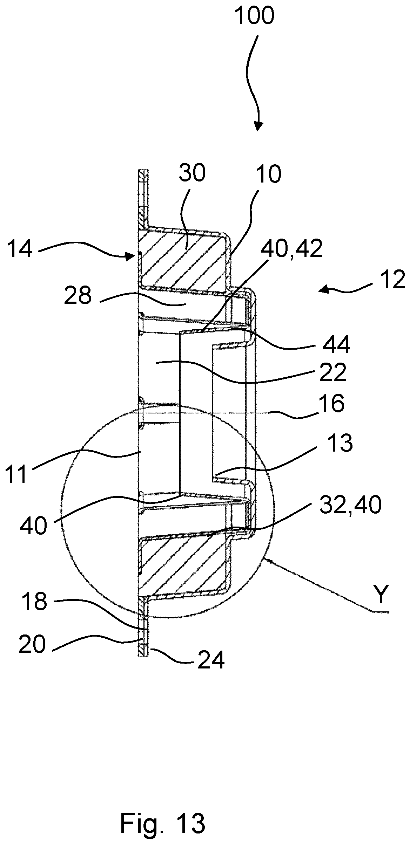

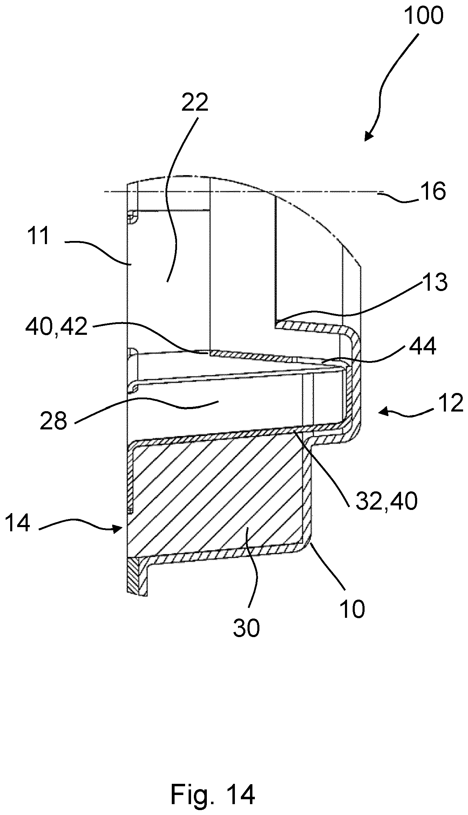

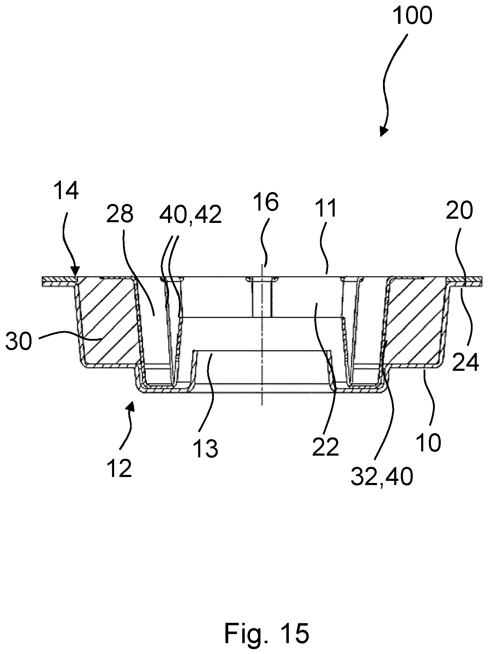

Fig. 10 depicts the collection device 100 in a top view with section planes A-A, B-B, C-C. Fig. 11 depicts a sectional view of the collection device 100 in section plane A-A with detail X, which is shown in Fig. 12. Fig. 13 depicts a sectional view of the collection device 100 in section plane B-B with detail Y which is shown in Fig. 14. Fig. 15 depicts a sectional view of the collection device 100 in section plane C-C.

In the Figures different views of the labyrinth structure 40 as well as details concerning the contour elements 42 of the labyrinth structure 40 as well as the support elements 32 are to be seen.

The collection device 100 shown may be mounted favorably on top of a battery housing 60 but mounting at a side of a battery housing is also possible.

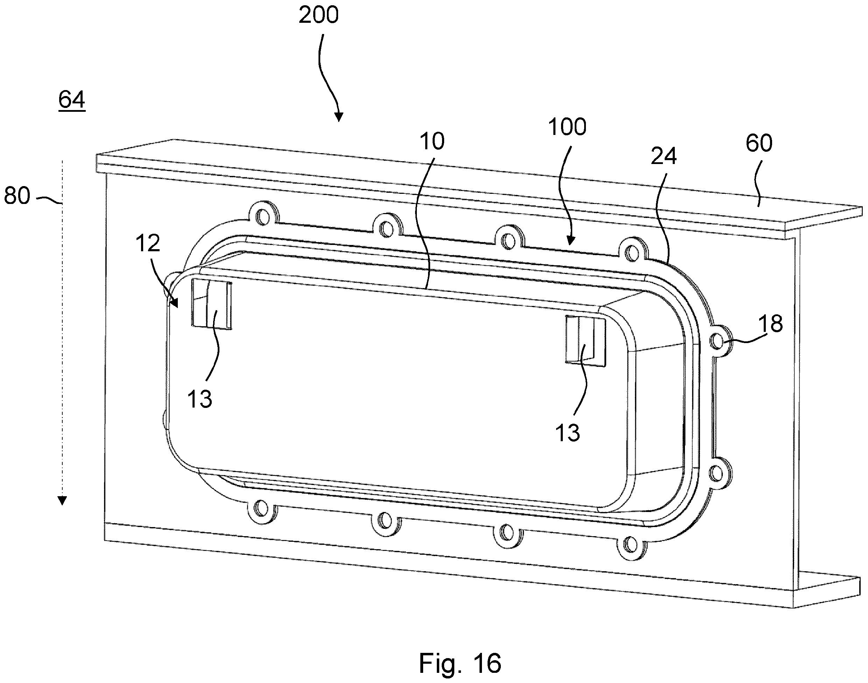

Fig. 16 depicts a collection system 200 according to further embodiments, in an isometric view from a front side 12.

In these embodiments, the base body 10 has a closed circumference in relation to an axial direction 16 of the collection device 100, having a rectangular shape. The base body 10 also has a circumferential rim 24 which is a seat for a sealing element 20 being arranged circumferentially between the rim 24 of the base body 10 and the battery housing 60 when mounted to the battery housing 60.

The base body 10 has two fluid outlets 13 which are positioned in upper corners of its rectangular shape.

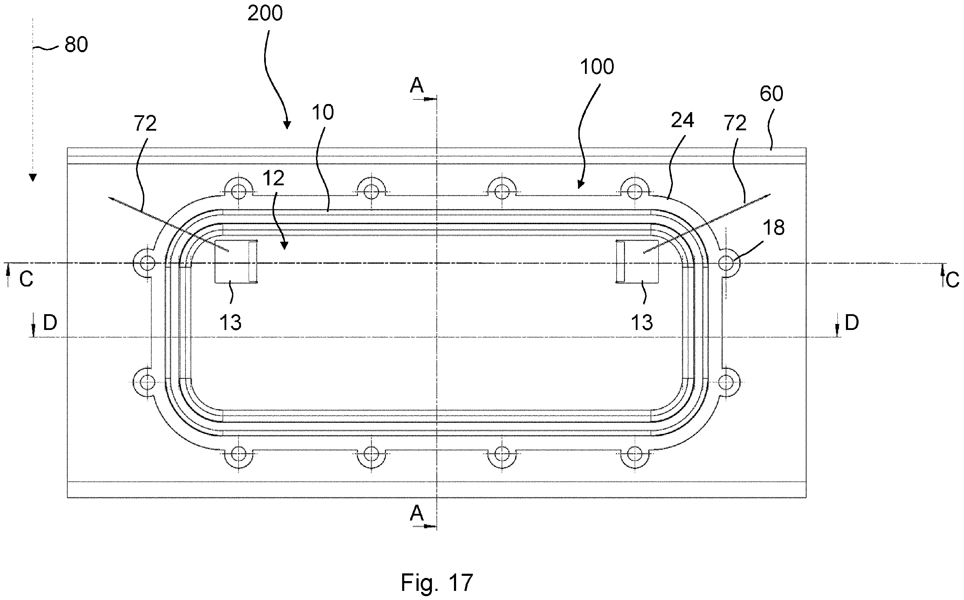

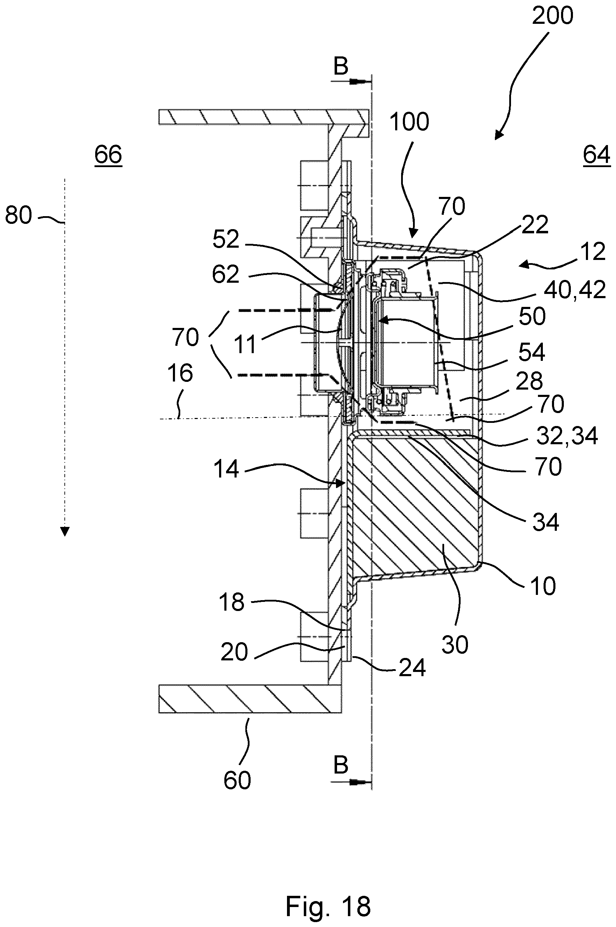

Fig. 17 depicts the collection system 200 in a top view with section planes A-A, C-C, D-D. Fig. 18 depicts a sectional view of the collection system 200 in section plane A-A with section plane B-B.

As may be seen from Fig. 18 the liquid absorbing material 30 is arranged in a lower part of the interior space 28 referring to a direction 80 of gravity in an intended mounting situation at a battery housing 60. Related to the direction 80 of gravity the liquid absorbing material 30 is arranged below the opening 62 of the battery housing 60 and hence the pressure relief valve 50 mounted to the opening 62.

Liquid stream 70 (dashed lines) in case of the pressure relief valve 50 to be open for venting flowing around the closure element 54 is indicated in the Figure. The liquid stream 70 is directed to the liquid absorbing material 30 not only be the labyrinth structure 40 directing the liquid stream 70 but also due to gravity. The liquid absorbing material 30 is fixed to the base body by a support element 32 being part of the labyrinth structure 40.

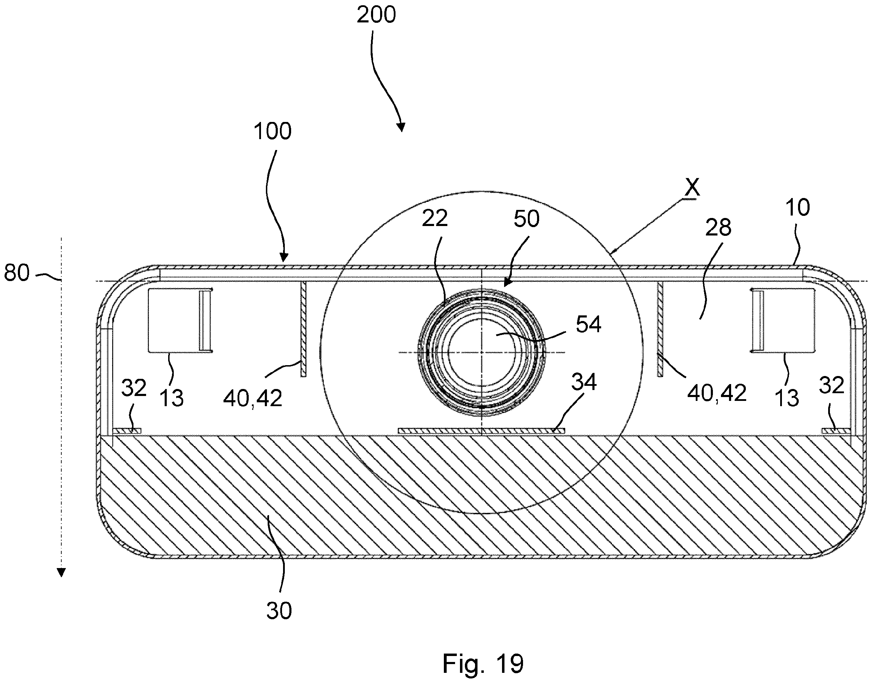

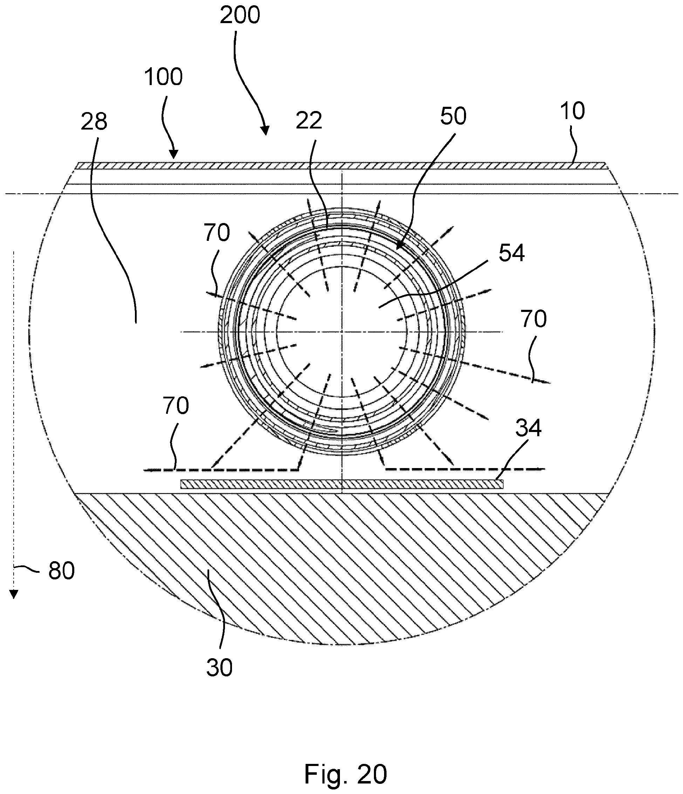

Fig. 19 depicts a sectional view of the collection system 200 in section plane B-B with detail X which is shown in Fig. 20.

In Fig. 19 the arrangement of the liquid absorbing material 30 in the lower part of the base body 10, related to the direction 80 of gravity, is indicated. The liquid absorbing material 30 is fixed to the base body 10 by some support elements 32. The liquid absorbing material 30 is further fixed by a protection element 34 which may protect the liquid absorbing material 30 against impact of the liquid emerging through the centrally positioned pressure relief valve 50 shown in Fig. 19 with its closure element 54.

The two fluid outlets 13 in the upper corners of the rectangular shaped base body 10 are to be seen. Between the fluid outlets 13 and the pressure relief valve 50 contour elements 42 of the labyrinth structure 40 are arranged in order to prevent liquid from streaming directly to the fluid outlets 13.

In the detail X of Fig. 20 possible directions of the liquid stream 70 emerging through the open pressure relief valve 50 are indicated. The liquid stream 70 is directed radially away from the pressure relief valve 50 and is first deflected by the protection element 34 at the top of the liquid absorbing material 30. Thus, the liquid absorbing material 30 is protected from impact of the emerging liquid.

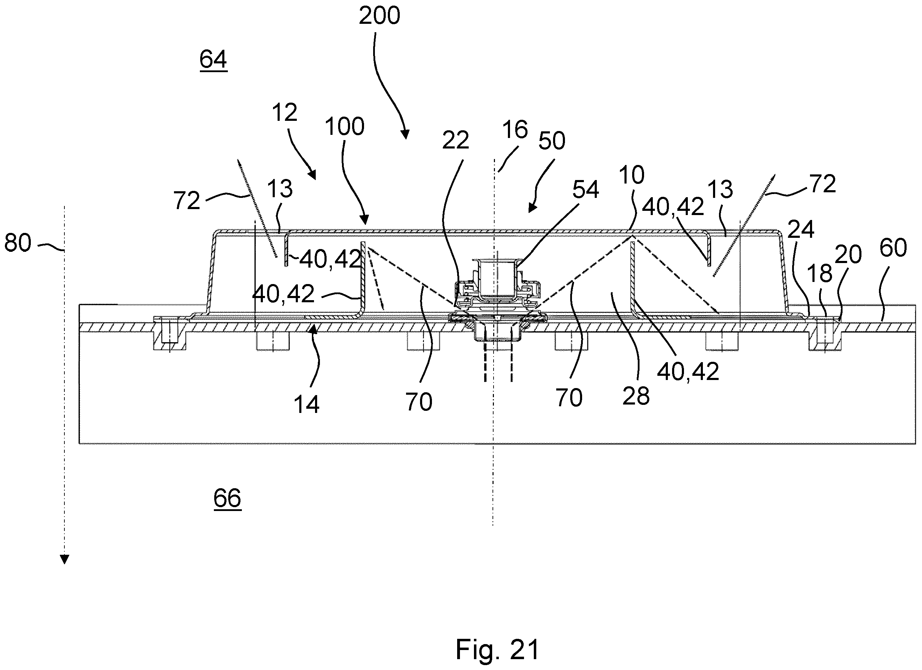

Fig. 21 depicts a sectional view of the collection system 200 in section plane C-C.

Further liquid streams 70 (dashed lines) are indicated from the liquid emerging from the interior 66 of the battery housing 60 through the pressure relief valve 50 and being deflected by different contour elements 42 in the interior space 28 of the base body 10. Thus, the liquid streams 70 do not reach the fluid outlets 13, but get absorbed by the liquid absorbing material 30.

Also, gas streams 72 (dotted lines) emerging through the fluid outlets 13 into the environment 64 are indicated.

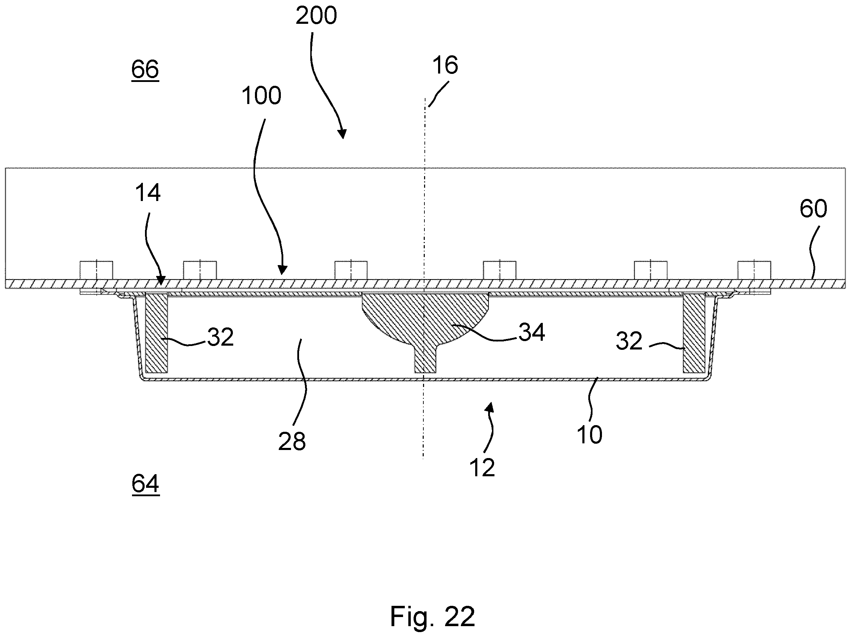

Fig. 22 depicts a sectional view of the collection system 200 in section plane D-D.

In this view the support elements 32 for fixing the liquid absorbing material 30 to the base body 10 as well as the protection element 34 for preventing the liquid absorbing material 30 from being damaged by the streaming liquid is to be seen. The protection element 34 is arranged, related to the direction 80 of gravity, below the pressure relief valve 50.

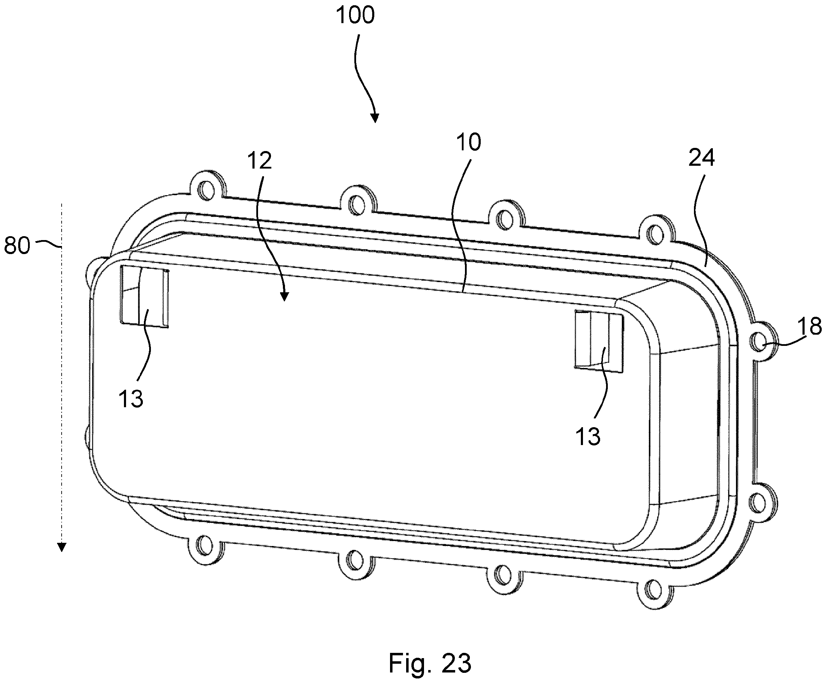

In Figs. 23 to 29 corresponding views of the collection device 100 alone without the pressure relief valve 50 are shown.

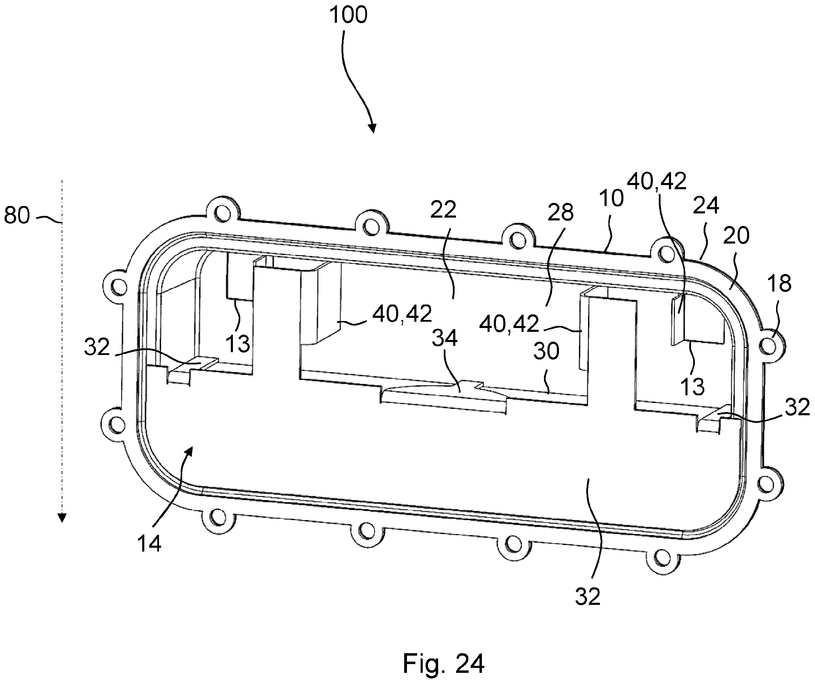

Fig. 23 depicts the collection device 100 of the collection system 200 according to Figs. 16 to 22, in an isometric view from a front side 12. Fig. 24 depicts the collection device 100 according to Fig. 23 from the rear side 14.

In Fig. 24 the interior space 28 of the collection device 100 is to be seen.

The liquid absorbing material 30 is arranged in the lower part of the base body 10 and is fixed by support elements 32 at both ends as well as by the protection element 34 in the middle part to the base body 10. On the rear side 14 the support element 32 is covering the whole area of the liquid absorbing material 30.

The support element 32 is integral part of the labyrinth structure 40 or vice versa. The labyrinth structure 40 is configured with contour elements 42 extending to the front side 12 which are located between the position of the pressure relief valve 50 (not shown) in the middle part and the fluid outlets 13 at both sides.

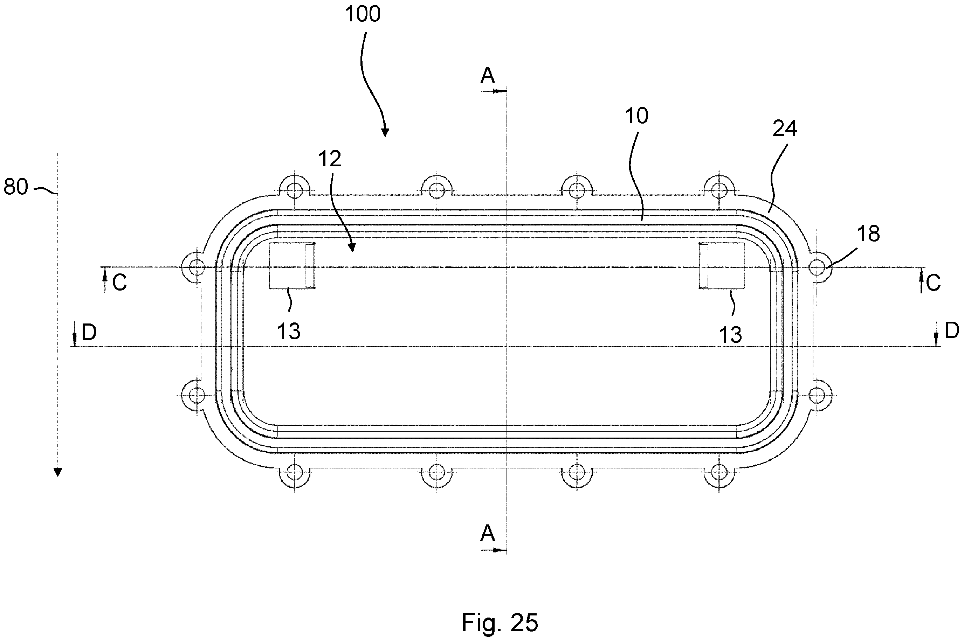

Fig. 25 depicts the collection device 100 according to Fig. 23 in a top view with section planes A-A, C-C, D-D.

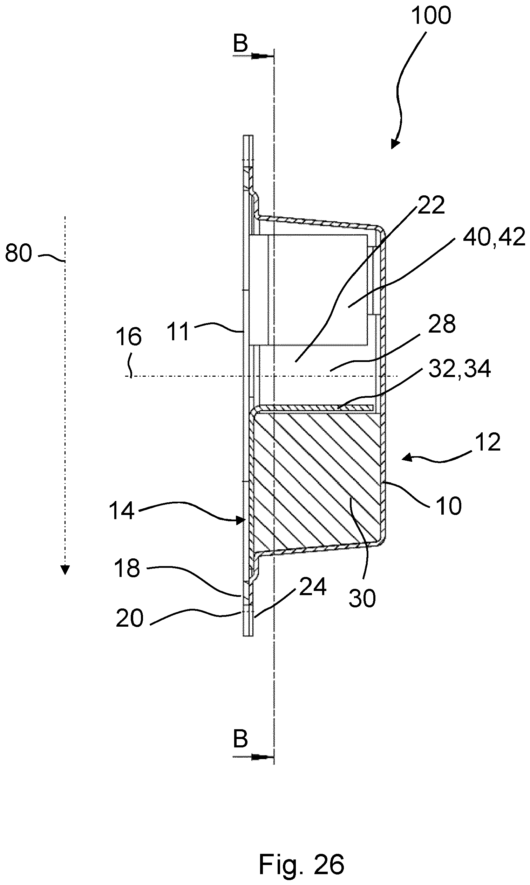

Fig. 26 depicts a sectional view of the collection device in section plane A-A with section plane B-B. Here the separation between liquid absorbing material 30 and the rest of the interior space 28 with the passage 22 is to be seen.

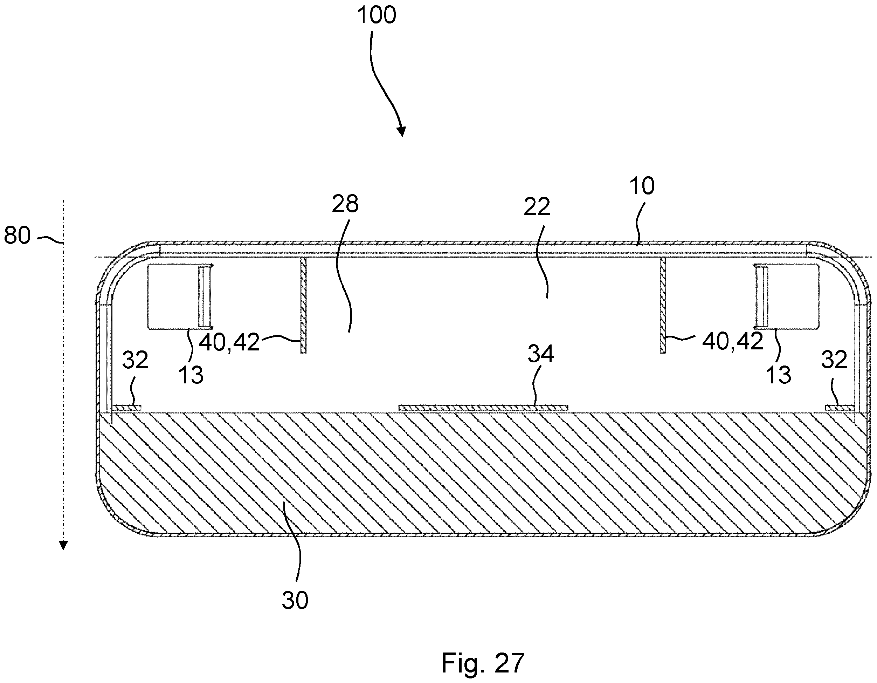

The sectional view of the collection device 100 in section plane B-B depicted in Fig. 27 corresponds to the sectional view shown in Fig. 19. The pressure relief valve 50 is just omitted.

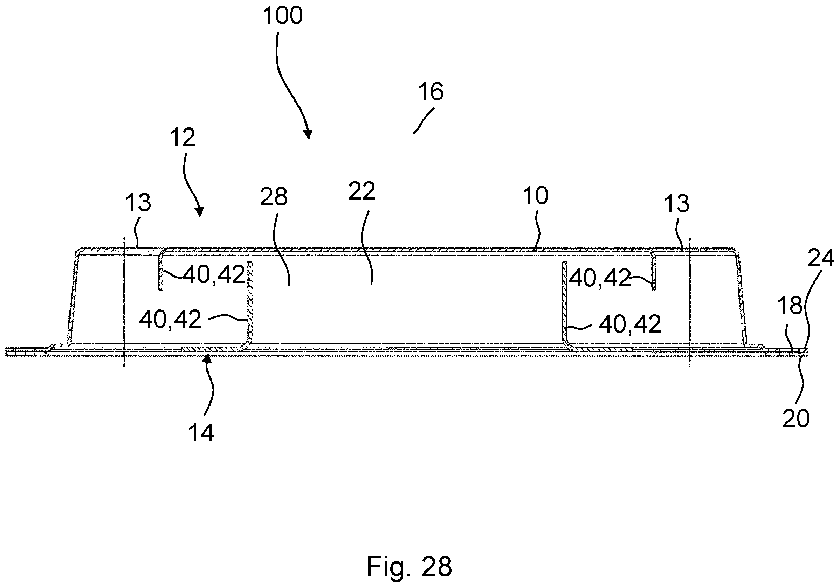

Fig. 28 depicts a sectional view of the collection device 100 in section plane C-C presenting the arrangement of the contour elements 42 of the labyrinth structure 40 in the interior space 28 of the base body 10.

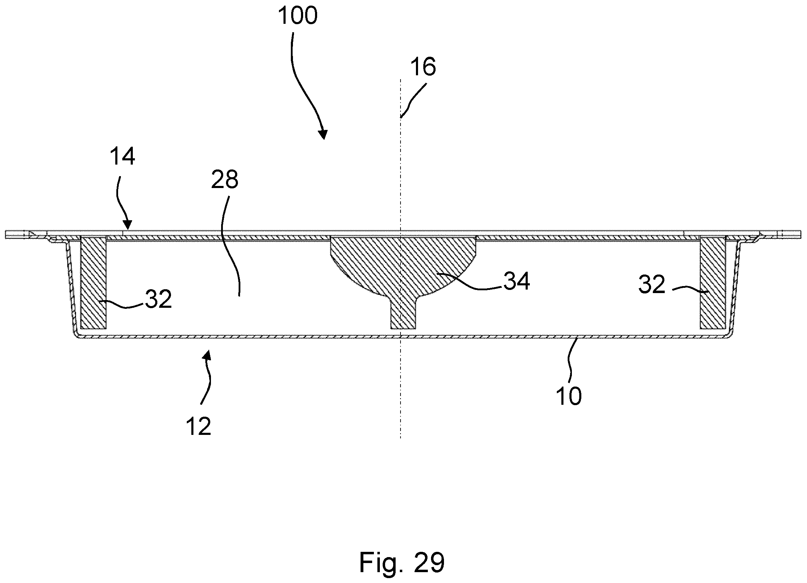

Fig. 29 depicts a sectional view of the collection device 100 in section plane D-D where the support elements 32 and the protection element 34 fixing the liquid absorbing material 30 are to be seen.

### Reference Signs List

- 10: base body
- 11: fluid inlet
- 12: front side
- 13: fluid outlet
- 14: rear side
- 16: axial direction
- 18: mounting element
- 20: sealing element
- 22: fluid passage
- 24: rim
- 28: interior space
- 30: liquid absorbing material
- 32: support element
- 34: protection element
- 40: labyrinth structure
- 42: contour element
- 44: discharge opening
- 50: pressure relief valve
- 52: sealing element
- 54: closure element
- 60: battery housing
- 62: opening
- 64: environment
- 66: interior
- 70: liquid stream
- 72: gas stream
- 80: direction of gravity
- 100: liquid collection device
- 200: liquid collection system

## Claims

1. A collection device (100) for an immersion cooled battery, in particular a traction battery of a motor vehicle, the collection device (100) being configured to be mounted to a battery housing (60) and comprising:
a base body (10) comprising a fluid inlet (11), a fluid outlet (13) for discharging a fluid escaping from the battery, and a fluid passage (22) extending between the fluid inlet (11) and the fluid outlet (13), the base body (10) surrounding an interior space (28); and
a liquid absorbing material (30) disposed in at least part of the interior space (28).

2. The collection device (100) according to claim 1, further comprising a labyrinth structure (40) arranged along the fluid passage (22) and inside the base body (10), the labyrinth structure (40) comprising at least one contour element (42) configured to control a direction of liquid when streaming from the fluid inlet (11) to the fluid outlet (13).

3. The collection device (100) according to claim 2, further comprising at least one support element (32) arranged inside the base body (10) and fixing the liquid absorbing material (30) to the base body (10).

4. The collection device (100) according to any one of the preceding claims , wherein the liquid absorbing material (30) is any one or any combination of a sponge, a granulate, and an absorbent polymer.

5. The collection device (100) according to claim 3, wherein at least part of the labyrinth structure (40) is integrated in the at least one support element (32) supporting the liquid absorbing material (30).

6. The collection device (100) according to any one of the preceding claims, wherein the base body (10) further comprises a closed circumference in relation to an axial direction (16) of the collection device (100).

7. The collection device (100) according to any one of the preceding claims, wherein the base body (10) further comprises a sealing element (20) and a circumferential rim (24) configured to be a seat for the sealing element (20) that is configured to be arranged circumferentially between the circumferential rim (24) and the battery housing (60) when the collection device (100) is mounted to the battery housing (60).

8. The collection device (100) according to any one of the preceding claims, further comprising at least one protection element (34) arranged in the interior space (28) of the base body (10) and configured to prevent direct impact of liquid on the liquid absorbing material (30).

9. The collection device (100) according to any one of the preceding claims, wherein the liquid absorbing material (30) is arranged circumferentially on a radially outer part of the interior space (28) or arranged in a lower part of the interior space (28) referring to a direction (80) of gravity in an intended mounting situation at the battery housing (60).

10. A collection system (200) for the immersion cooled battery, the collection system (200) comprising:
the collection device (100) according to any one of the preceding claims; and
a pressure relief valve (50) arranged at the fluid inlet (11) of the base body (10) of the collection device (100), the pressure relief valve (50) being configured to open the fluid passage (22) when a predetermined excess pressure in the battery housing (60) is reached or exceeded.

11. The collection system (200) according to claim 10 , wherein the pressure relief valve (50) is at least partly accommodated in the interior space (28) of the base body (10).

12. A battery housing (60) of the immersion cooled battery, the battery housing (60) comprising:
the collection system (200) according to claim 10 or 11; and
an opening (62),
wherein the base body (10) of the collection system (200) is mounted inside or outside the battery housing (60), the base body (10) comprising a front side (12) or a rear side (14) in a substantially fluid tight manner to the opening (62), and
wherein the pressure relief valve (50) is mounted at the opening (62).
